(19) Europäisches Patentamt
European Patent Office
Office européen des brevets

(11) **EP 2 902 288 B1**

(12) **EUROPÄISCHE PATENTSCHRIFT**

(45) Veröffentlichungstag und Bekanntmachung des Hinweises auf die Patenterteilung:
**16.10.2019 Patentblatt 2019/42**

(51) Int Cl.:
*B60W 30/00* (2006.01)      *B60W 50/00* (2006.01)
*B60W 10/02* (2006.01)      *B60W 30/02* (2012.01)
*B60W 30/20* (2006.01)

(21) Anmeldenummer: **14002980.2**

(22) Anmeldetag: **28.08.2014**

(54) **Verfahren und Vorrichtung zur Verarbeitung einer Drehmomentvorgabe und zur Reduzierung von Triebstrangschlägen**

Method and device for processing a torque input and for reducing drive train impacts

Procédé et dispositif de traitement d'une consigne de couple de rotation et de réduction de chocs de transmission

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.12.2013 DE 102013021149**

(43) Veröffentlichungstag der Anmeldung:
**05.08.2015 Patentblatt 2015/32**

(73) Patentinhaber: **MAN Truck & Bus SE**
**80995 München (DE)**

(72) Erfinder:
• **Weller, Ralf**
**80638 München (DE)**

• **Schön, Christian**
**80798 München (DE)**
• **Berchtold, Florian**
**85748 Garching (DE)**

(74) Vertreter: **v. Bezold & Partner Patentanwälte - PartG mbB**
**Akademiestraße 7**
**80799 München (DE)**

(56) Entgegenhaltungen:
**DE-A1-102005 015 484      GB-A- 2 389 428**

**Beschreibung**

Die Erfindung betrifft eine Vorrichtung und ein Verfahren zur Verarbeitung einer Drehmomentvorgabe für eine Antriebsmaschine und zur Reduzierung von Triebstrangschlägen.

Triebstrangschläge, auch als Ruckelschwingung bezeichnet, sind im Stand der Technik bekannt und stellen unerwünschte Fahrzeug-Längsschwingungen dar, die durch Energieeinleitung, insbesondere beim Beschleunigen des Fahrzeugs, in das Schwingungssystem Motor-Triebstrang-Karosse erzeugt werden.

Zur Vermeidung oder Reduzierung solcher Triebstrangschläge ist es aus dem Stand der Technik bekannt, die Drehmomentanforderungen der Drehmomentquellen, nachfolgend auch als Momentenanforderungen bezeichnet, wie beispielsweise die Drehmomentanforderung des Fahrpedals, des Geschwindigkeitsbegrenzers etc. zu filtern, um einen möglichst verrundeten Momentenverlauf und/oder einen Momentenverlauf mit reduziertem Gradienten zu erzeugen, bevor die Drehmomentanforderung an die Motorsteuerung weitergeleitet wird.

Die Offenlegungsschrift DE 10 2005 015 484 A1 offenbart einen weiteren Ansatz um Triebstrangschläge, insbesondere Lastwechselschläge, zu verhindern, wobei vorgeschlagen wird, dass ein Lastwechselschlag durch eine Vorsteuerung einer Elektromaschine vermieden wird, mit der ein Elektromaschinenmoment erzeugt wird, das sich so zu einem Verbrennungsmotormoment überlagert, dass der Gradient des Summenmoments beim Momentennulldurchgang möglichst klein wird. Ein Nachteil dieses Ansatzes ist es, dass hierfür eine zusätzliche Elektromaschine vonnöten ist, mit der ein derartiges Kompensieren des Maschinenmoments erzeugbar ist.

Es ist ferner bekannt, in dem Bereich um das Kupplungsnullmoment, d. h. in dem Bereich, wo der Antriebsstrang entspannt ist und kein Moment über die Kupplung übertragen wird, einen möglichst geringen Gradienten der Drehmomentanforderung zu erzeugen, um Triebstangenschläge beim Übergang eines entspannten Triebstrangs zu einem gespannten Triebstrang zu vermeiden.

Ein Nachteil der aus der Praxis bekannten Ansätze zur Verarbeitung einer Drehmomentvorgabe ist, dass dennoch Triebstrangschläge in unerwünschter Stärke auftreten können.

Es ist somit eine Aufgabe der Erfindung, eine verbesserte Vorrichtung und ein verbessertes Verfahren zur Verarbeitung von Drehmomentvorgaben für die Motorsteuerung bereitzustellen, mit denen Nachteile herkömmlicher Techniken vermieden werden können. Die Aufgabe der Erfindung ist es insbesondere, eine Vorrichtung zur Verarbeitung von Drehmomentvorgaben bereitzustellen, mit der Triebstrangschläge, die am Kupplungsnullmoment auftreten, besser reduziert werden können.

Diese Aufgaben werden durch eine Vorrichtung und ein Verfahren mit den Merkmalen der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß allgemeinen Gesichtspunkten der Erfindung wird eine Vorrichtung zur Verarbeitung einer Drehmomentvorgabe für eine Antriebsmaschine, insbesondere für einen Motor eines Kraftfahrzeugs, zur Reduzierung von Triebstrangschlägen vorgeschlagen, die eingerichtet ist, einen Gradienten der Drehmomentanforderung in einem Bereich am Kupplungsnullmoment zu reduzieren, so dass der Signalverlauf beim Durchgang durch das Kupplungsnullmoment einen flacheren Verlauf aufweist.

Hierbei ist die Vorrichtung eingerichtet, ein trägheitsbedingtes Drehmoment der Antriebseinheit zu bestimmen und das Kupplungsnullmoment in Abhängigkeit von dem trägheitsbedingten Drehmoment zu bestimmen. Besonders vorteilhaft ist, das trägheitsbedingte Drehmoment der Antriebseinheit in Abhängigkeit von einer Winkelbeschleunigung der Antriebseinheit zu bestimmen, die sich für das Kupplungsnullmoment ergeben würde. Dies ist die Winkelbeschleunigung der Antriebseinheit am Kupplungsnullmoment.

Als Kupplungsnullmoment wird das primärseitig indizierte innermotorische Moment bezeichnet, welches dazu führt, dass über die Kupplung kein Moment übertragen wird. Am Kupplungsnullmoment ist der Triebstrang somit entspannt, da an diesem Punkt das erzeugte Drehmoment von motorseitigen Verlusten und motorseitigen Verbrauchern aufgebracht wird.

Zur Bestimmung des Kupplungsnullmoments können die folgenden Momente addiert werden: eine Motorreibung, ein Verlustmoment des Lüfters, ein Verlustmoment der motorseitigen Nebenverbraucher (beispielsweise Luftpresser, Lenkhilfspumpe, Generator, Klimaanlage etc.) und/oder das trägheitsbedingte Moment des Motors. Wird Letzteres bei der Winkelbeschleunigung der Antriebseinheit, die sich für das Kupplungsnullmoment ergeben würde, bestimmt, kann das trägheitsbedingte Moment des Motors, das am Kupplungsnullmoment vorliegt, besonders genau bestimmt werden.

Gemäß einem besonders bevorzugten Ausführungsbeispiel wird eine theoretische Fahrzeuglängsbeschleunigung in Abhängigkeit von einem Fahrwiderstand für den offenen Triebstrang und in Abhängigkeit von einer Fahrzeugmasse berechnet. Die berechnete Fahrzeuglängsbeschleunigung ist eine theoretische Fahrzeuglängsbeschleunigung, da diese nur dann messbar auftreten würde, wenn das Fahrzeug am Kupplungsnullmoment verweilen würde, d..h. in einem Zustand eines entspannten Triebstrangs. Da das Fahrzeug das Kupplungsnullmoment jedoch in der Praxis überquert und nicht in diesem Punkt verbleibt, handelt es sich bei der berechneten theoretische Fahrzeuglängsbeschleunigung nicht um die tatsächliche Fahrzeuglängsbeschleunigung, sondern um eine berechnete Größe, mittels der die Winkelbeschleunigung der Antriebseinheit am Kupplungsnullmoment berechnet werden kann.

Ferner kann eine Winkelbeschleunigung der Antriebseinheit bzw. Kupplungsscheibe am Kupplungsnullmoment in Abhängigkeit von der berechneten Fahrzeuglängsbeschleunigung und einer Triebstrangübersetzung bestimmt werden. Das trägheitsbedingte Drehmoment des Motors am Kupplungsnullmoment kann dann in Abhängigkeit von einer Trägheitsmasse des Motors und der Winkelbeschleunigung der Kupplungsscheibe als Produkt der beiden Größen bestimmt werden. Die Winkelbeschleunigung der Kupplungsscheibe am Kupplungsnullmoment entspricht der Winkelbeschleunigung der Antriebseinheit am Kupplungsnullmoment.

Der Fahrwiderstand für den offenen Triebstrang ist eine an sich bekannte Größe, die in aus der Praxis bekannten Steuergeräten von Fahrzeugen ermittelt wird und dort vorliegt. Der Fahrwiderstand F des offenen Triebstranges gibt an, welche Kraft auf das Fahrzeug, wenn es länger am Punkt des Kupplungsnullmoments, bei dem kein Antriebsmoment übertragen wird, verbliebe, wirken würde. Die Fahrwiderstandsbeschleunigung a ergibt sich dann aus der Fahrwiderstandskraft ($F = m*a$). Folglich entspricht der Fahrwiderstandsbeschleunigung a der berechneten Fahrzeuglängsbeschleunigung.

Bei Versuchen im Rahmen der Erfindung wurde festgestellt, dass eine exakte Bestimmung des Kupplungsnullmoments von großer Bedeutung ist, um einen sehr geringen Triebstrangschlag im Bereich unmittelbar um das Kupplungsnullmoment zu erzielen. Ein besonderer Vorzug der Erfindung liegt somit darin, dass über die vorstehend beschriebenen bekannten Größen wie den Fahrwiderstand das trägheitsbedingte Moment des Motors am Kupplungsnullmoment, d. h. bei der Winkelbeschleunigung bzw. dem Drehzahlgradienten, die bzw. der sich für das Kupplungsnullmoment ergeben würde, bestimmt werden kann.

Dies verbessert die Bestimmung des Kupplungsnullmoments und somit die Möglichkeit, Triebstrangschläge zu reduzieren.

Bei einer vorteilhaften Variante der vorgenannten Ausgestaltungsform kann die Vorrichtung eingerichtet sein, das trägheitsbedingte Drehmoment M zu berechnen als $M = (J * F * ü\_gear * i\_rearAxle) / (m * r\_Rad)$, wobei J der Trägheitsmasse des Motors, F der Fahrwiderstandskraft bei offenem Triebstrang, ü\_gear der Getriebeübersetzung, i\_rearAxle der Hinterachsübersetzung, m der Fahrzeugmasse und r\_Rad dem Radradius entspricht.

Im Rahmen der Erfindung wurde ferner festgestellt, dass die Bestimmung des Kupplungsnullmoments weiter durch einen Korrekturwert zur Berücksichtigung unbestimmter Drehmomentverbraucher verbessert werden kann. Unbestimmte Drehmomentverbraucher sind weitere motorseitige Drehmomentverbraucher, die nicht bekannt sind, nicht genau berechnet werden können und/oder deren aufgenommenes Drehmoment im Fahrbetrieb variiert.

Der Korrekturwert ermöglicht somit eine noch genauere Bestimmung des Kupplungsnullmoments. Vorzugsweise wird der Korrekturwert im Fahrbetrieb mittels eines iterativen Algorithmus bestimmt, um sich der unbekannten Drehmomentgröße anzunähern und/oder um sich Änderungen des motorseitigen Drehmomentverbrauchs im Fahrbetrieb anpassen zu können.

Besonders vorteilhaft ist, dass die Vorrichtung so eingerichtet sein kann, den Korrekturwert in Abhängigkeit von einem Triebstrangschlag, der bei einer Überquerung des Kupplungsnullmoments bestimmt wird, zu variieren. Bei einer vorteilhaften Variante dieser Ausführungsform wird der Korrekturwert proportional zum Triebstrangschlag variiert. Beispielsweise wird der Korrekturwert erhöht, wenn der Triebstrangschlag groß ist. Umso stärker der Triebstrangschlag, umso größer ist die Wahrscheinlichkeit, dass der Korrekturwert stärker verändert werden muss, so dass ein linearer Zusammenhang zwischen einem Korrekturwert und dem Triebstrangschlag zu einer iterativ schnellen Annäherung an den tatsächlich gesuchten Korrekturwert führen kann.

In einem bevorzugten Ausführungsbeispiel wird der Triebstrangschlag bei der Überquerung des Kupplungsnullmoments in Abhängigkeit von einer Amplitude einer Motordrehzahl und einer zweiten Ableitung der Motordrehzahl bestimmt. Im Rahmen der Erfindung wurde festgestellt, dass ein Triebstrangschlag in einem erwarteten Bereich um das Kupplungsnullmoment durch eine Änderung, z. B. durch eine Schwingung, der Motordrehzahl bestimmt werden kann, so dass durch Messung der Amplitude einer Motordrehzahl und Bestimmung der zweiten Ableitung der Motordrehzahl in dem Bereich der Änderung der Motordrehzahl der Triebstrangschlag erkannt und quantifiziert werden kann.

Gemäß einem bevorzugten Ausführungsbeispiel der Erfindung umfasst der iterative Algorithmus eine Abfolge von Schritten, die wiederholt zur Aktualisierung des Korrekturwerts durchgeführt werden, wobei die Abfolge von Schritten umfasst:

(a) Bestimmen eines ersten Korrekturwerts;
(b) Bestimmen eines ersten Triebstrangschlags, der in Abhängigkeit des ersten Korrekturwerts erzeugt wird;
(c) Bestimmen eines zweiten Korrekturwerts durch Erhöhen oder Verringern des ersten Korrekturwerts um einen vom ersten Triebstrangschlag abhängigen Variationsbetrag und Bestimmen eines zweiten Triebstrangschlags, der in Abhängigkeit des zweiten Korrektorwerts erzeugt wird.

Falls der zweite Triebstrangschlag kleiner als der erste Triebstrangschlag ist, wird der Schritt (d) durchgeführt.

(d) Festlegen des zweiten Korrekturwerts als neuer erster Korrekturwert und Festlegen des zweiten Triebstrangschlags als neuer Wert für den ersten Triebstrangschlag und Wiederholen von Schritt (c). Falls jedoch der zweite Triebstrangschlag größer als der erste Triebstrangschlag ist, werden die Schritte (e) und (f) durchgeführt.

(e) Bestimmen eines dritten Korrekturwerts durch Verringern oder Erhöhen des ersten Korrekturwerts, um den vom ersten Triebstrangschlag abhängigen Variationsbetrag in die vom zweiten Korrekturwert entgegengesetzte Richtung;

(f) Bestimmen eines dritten Triebstrangschlags, der in Abhängigkeit des dritten Korrekturwerts erzeugt wird.

(g) Falls der dritte Triebstrangschlag kleiner als der erste Triebstrangschlag ist, Festlegen des dritten Korrekturwerts als neuer erster Korrekturwert und Festlegen des dritten Triebstrangschlags als neuer Wert für den ersten Triebstrangschlag und Wiederholen von Schritt (e); und

(h) falls der dritte Triebstrangschlag größer als der erste Triebstrangschlag ist, Wiederholen von Schritt (b).

Gemäß einer weiteren bevorzugten Ausgestaltungsform kann die Vorrichtung eingerichtet sein, für jeden Gang einen eigenen Korrekturwert zu bestimmen und zu speichern, wobei bei Anlegung eines Ganges der für den eingelegten Gang abgespeicherte Korrekturwert anstelle des Korrekturwerts des zuvor eingelegten Gangs zur Bestimmung des Kupplungsnullmoments verwendet wird. Dies ermöglicht eine schnellere Bestimmung des optimalen Korrekturwerts, da sich die Ursachen für den Wert des Korrekturwerts entsprechend dem eingelegten Gang unterschiedlich auswirken können.

Gemäß einem weiteren Aspekt der Erfindung wird ein Fahrzeug, insbesondere ein Nutzfahrzeug, beansprucht, umfassend eine Vorrichtung zur Verarbeitung von Drehmomentanforderungen gemäß einem der vorstehenden Aspekte.

Gemäß einem weiteren Aspekt der Erfindung wird ein Verfahren zur Verarbeitung einer Drehmomentvorgabe für eine Antriebsmaschine und zur Reduzierung von Triebstrangschlägen vorgeschlagen. Das Verfahren umfasst den Schritt: Reduzieren eines Gradienten der Drehmomentvorgabe in einem Bereich um das Kupplungsnullmoment, wobei ein trägheitsbedingtes Drehmoment der Antriebseinheit bestimmt wird und das Kupplungsmoment in Abhängigkeit von dem trägheitsbedingten Drehmoment bestimmt wird.

Vorzugsweise wird das trägheitsbedingte Drehmoment der Antriebseinheit bei dem Drehzahlgradienten der Antriebseinheit bestimmt, das sich für das Kupplungsnullmoment ergeben würde. Gemäß einem bevorzugten Ausführungsbeispiel umfasst das Verfahren die Schritte: Bestimmen einer Fahrzeuglängsbeschleunigung in Abhängigkeit von einem Fahrwiderstand für den offenen Triebstrang und einer Fahrzeugmasse; Bestimmen einer Winkelbeschleunigung der Kupplungsscheibe in Abhängigkeit von der Fahrzeuglängsbeschleunigung und einer Getriebeübersetzung; und Bestimmen des trägheitsbedingten Drehmoments in Abhängigkeit von einer Trägheitsmasse des Motors und der Winkelbeschleunigung der Kupplungsscheibe. Gemäß einem weiteren bevorzugten Ausführungsbeispiel erfolgt die Bestimmung eines Korrekturwerts zur Berücksichtigung unbestimmter Drehmomentverbraucher und die Bestimmung des Kupplungsnullmoments in Abhängigkeit des Korrekturwerts.

Zur Vermeidung von Wiederholungen sollen rein vorrichtungsgemäß offenbarte Merkmale auch als verfahrensgemäß offenbart gelten und beanspruchbar sein. Die vorgenannten Aspekte und erfindungsgemäßen Merkmale betreffend die Bestimmung des trägheitsbedingten Drehmoments der Antriebseinheit und betreffend die Bestimmung des Korrekturwerts gelten somit auch für das Verfahren.

Weitere Einzelheiten und Vorteile der Erfindung werden im Folgenden unter Bezug auf die beigefügten Zeichnungen beschrieben. Es zeigen:

Figur 1    eine schematische beispielhafte Darstellung einer ungefilterten Drehmomentanforderung und einer gefilterten Drehmomentanforderung mit verrundetem Verlauf und Gradientenbegrenzung gemäß einem Ausführungsbeispiel;

Figur 2    ein Ablaufdiagramm zur Illustration einer iterativen Berechnung eines Korrekturwerts für das Kupplungsnullmoment gemäß einem Ausführungsbeispiel; und

Figur 3    Beispiele für berechnete Korrekturwerte gemäß dem iterativen Berechnungsverfahren aus Figur 2.

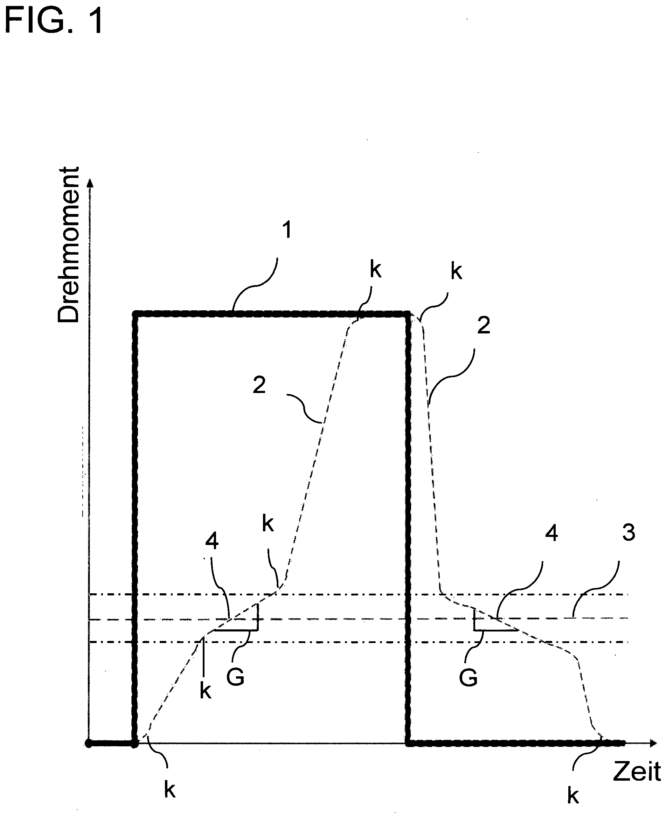

Figur 1 zeigt beispielhaft eine ungefilterte Drehmomentvorgabe 1, die zeitlich verzögert wird, um einen verarbeiteten Drehmomentenverlauf 2 zu erzeugen, um dadurch Triebstrangschläge zu vermeiden.

Die Drehmomentanforderung 1 kann beispielsweise von einem Fahrpedal, einem Getriebeeingriff, einem Fahrgeschwindigkeitsregler, einem Schall-Management-System oder einer anderen Drehmomentanforderungsquelle erzeugt werden. Die Drehmomentanforderung 1 kann als Drehmomentvorgabe oder als Drehmomentlimitierung erzeugt werden. Unter einer Drehmomentvorgabe wird ein Sollwert für das anzusteuernde Motordrehmoment verstanden, auf den die Motordrehzahl eingestellt werden soll. Unter einer Drehmomentlimitierung wird ein Limitwert verstanden, den das einzustellende Motordrehmoment nicht überschreiten darf. Die in Form einer Rechteckfunktion erzeugte Drehmomentanforderung 1 wird durch eine Sollwertformervorrichtung (nicht gezeigt) passiv gefiltert und gibt die Drehmomentanforderung als die gestrichelte Kurve 2 aus.

In Übereinstimmung mit dem Stand der Technik werden die Kanten der Rechteckfunktion verrundet, was durch die Verrundungsfaktoren k in Figur 1 dargestellt ist. Ferner wird mittels einer aus dem Stand der Technik bekannten Gradientenbegrenzung um das Kupplungsnullmoment, das durch die gestrichelte Linie 3 gekennzeichnet ist, ein möglichst geringer Gradient G erzeugt.

Hierbei wird in einem Bereich um das Kupplungsnullmoment, in Figur 1 durch die strichgepunkteten Linien ober- und unterhalb der Linie 3 illustriert, der Kurvenverlauf der Momentvorgabe 1 zeitlich so verzögert, dass die resultierende Momentvorgabe 2 in dem Bereich um den Kupplungsnullpunkt 3 einen möglichst konstanten Verlauf 4 mit schwacher Steigung G aufweist. Bei dem Momentenaufbau in Figur 1 handelt es sich um eine passive Steuerung und somit nicht um einen geschlossenen Regelkreis, wie dies bei der aus der Stand der Technik ebenfalls bekannten aktiven Schwingungsdämpfung der Fall ist.

Das Erzeugen eines verrundeten und geglätteten Verlaufs 2 der ursprünglichen Momentenanforderung 1, mit einem möglichst geringen Gradienten im Bereich des Kupplungsnullmoments 3, ist an sich aus dem Stand der Technik bekannt. Beispielsweise kann durch Anwenden geeigneter Filter das Ursprungssignal 1 im Bereich um das Kupplungsnullmoment 3 zeitlich verzögert werden, so dass die zweite Ableitung und vorzugsweise auch die erste Ableitung des Momentenverlaufs möglichst geringe Werte annehmen, um den Verlauf 4 an dieser Stelle zu erzeugen. Die exakte Bestimmung des Kupplungsnullmoments ist von großer Bedeutung, um einen sehr geringen Triebschlag um das Kupplungsnullmoment erzielen zu können. Eine Vorrichtung zur Verarbeitung einer Drehmomentanforderung, wie in Figur 1 illustriert, kann vor der Momentenkoordination (Arbitrierung) oder nach der Momentenkoordination angeordnet sein und beispielsweise in eine Motorsteuerung integriert sein.

Nachfolgend wird eine Bestimmung des Kupplungsnullmoments gemäß einer bevorzugten Ausführungsform der Erfindung beispielhaft erläutert. Gemäß dieser Ausführungsform ist die Vorrichtung zur Verarbeitung einer Drehmomentanforderung (Sollwertumformervorrichtung) ferner eingerichtet, das Kupplungsnullmoment 3 gemäß den nachfolgenden Aspekten zu bestimmen. Je genauer das Kupplungsnullmoment 3 bestimmt wird, desto präziser kann in einem Bereich um das Kupplungsnullmoment 3 ein Verlauf 4 mit möglichst geringer 1. Ableitung und möglichst geringer 2. Ableitung beim Durchgang durch das Kupplungsnullmoment erzeugt werden.

Es wurde vorstehend bereits erwähnt, dass das Kupplungsnullmoment das primärseitig indizierte innermotorische Moment bezeichnet, welches dazu führt, dass über die Kupplung kein Moment übertragen wird. Das Kupplungsnullmoment wird bestimmt, indem folgende Momente addiert werden: die Motorreibung, die beispielsweise aus dem temperaturabhängigen Motorreibkennfeld, das in der Steuereinheit des Fahrzeugs hinterlegt ist, bestimmt werden kann; das Verlustmoment des Lüfters und das Verlustmoment der weiteren motorseitigen Nebenverbraucher wie beispielsweise Luftpresser, Lenkhilfspumpengenerator, Klimaanlage etc..

Ferner wird gemäß der vorliegenden Erfindung zur Bestimmung des Kupplungsnullmoments das trägheitsbedingte Drehmoment des Motors, vorliegend auch als trägheitsbedingtes Moment bezeichnet, am Kupplungsnullmoment als weiteres Verlustmoment addiert, um eine exaktere Bestimmung des Kupplungsnullmoments zu ermöglichen.

Das trägheitsbedingte Moment M des Motors am Kupplungsnullmoment ergibt sich aus

$$(\text{Formel 1}) \quad M = J * \alpha,$$

wobei J der Trägheitsmasse des Motors entspricht, die für jeden Motor beispielsweise experimentell bestimmt und in der Sollwertumformervorrichtung entsprechend hinterlegt werden kann. $\alpha$ entspricht der Winkelbeschleunigung des Motors, die sich am Kupplungsnullmoment für den Motor ergeben würde. Die Winkelbeschleunigung des Motors entspricht der Winkelbeschleunigung der Kurbelwelle.

Gemäß dem vorliegenden Ausführungsbeispiel wird die Winkelbeschleunigung $\alpha$ des Motors, die sich am Kupplungsnullmoment ergeben würde, nicht gemessen, sondern stattdessen, wie nachfolgend beschrieben, berechnet.

Die Winkelbeschleunigung $\alpha$ des Motors, die sich am Kupplungsnullmoment ergeben würde, wird als Produkt aus einer errechneten Fahrwiderstandsbeschleunigung a am Kupplungsnullmoment und der Triebstrangübersetzung ü berechnet:

$$(\text{Formel 2}) \quad \alpha = a * ü,$$

wobei a der Fahrwiderstandsbeschleunigung und ü der Triebstrangübersetzung entspricht. Die Fahrwiderstandsbeschleunigung a entspricht einer berechneten Fahrzeuglängsbeschleunigung des Fahrzeugs, die sich für das Fahrzeug ergeben würde, wenn das Fahrzeug länger am Kupplungsnullmoment verharren würde. Da dies in der Praxis jedoch in

EP 2 902 288 B1

der Regel nicht der Fall ist, da das Kupplungsnullmoment überquert wird, handelt es sich somit um eine nicht messbare, sondern vielmehr um eine theoretische Größe, die berechnet wird.

Die Fahrwiderstandsbeschleunigung a kann aus dem Quotienten der Fahrwiderstandskraft F für den offenen Triebstrang und der Fahrzeugmasse m bestimmt werden.

$$(\text{Formel 3}) \quad a = F / m,$$

wobei F der Fahrwiderstandskraft des Fahrzeugs für den offenen Triebstrang und m der Fahrzeugmasse entspricht. Die Fahrwiderstandskraft F des Fahrzeugs für den offenen Triebstrang entspricht der Fahrwiderstandskraft bei offener Kupplung. Da am Kupplungsnullmoment kein Drehmoment über die Kupplung übertragen wird, wirkt sich eine offene oder geschlossene Kupplung nicht unterschiedlich aus und die Fahrzeuglängsbeschleunigung des Fahrzeugs am Kupplungsnullmoment wird lediglich durch den Fahrwiderstand des Fahrzeugs für den offenen Triebstrang verursacht.

Die Bestimmung des trägheitsbestimmten Moments des Motors am Kupplungsnullmoment erfolgt somit ausgehend vom Fahrzeugfahrwiderstand für den offenen Triebstrang. Der Vorteil ist, dass die Bestimmung des Fahrzeugfahrwiderstands allgemein als Berechnungsalgorithmus im Steuergerät hinterlegt ist und aus dem Stand der Technik bekannt ist. Ein derartiger Berechnungsalgorithmus weiß ausgehend von einer Massenschätzung oder sensorischen Bestimmung der Fahrzeugmasse, wie schwer das Fahrzeug ist, und kann anhand der aktuellen Fahrzeuggeschwindigkeit bestimmen, wie stark das Fahrzeug aktuell verzögert. Die Fahrzeugsteuerung kennt ferner die Anforderungen seitens des Motors auf das Fahrzeug. Aus diesen Eingangsdaten können derartige Berechnungsalgorithmen errechnen, welche Kräfte von außen und welche von innen auf das Fahrzeug wirken. Die Kräfte, die von außen auf das Fahrzeug wirken, entsprechen dann dem Fahrzeugwiderstand.

Der verwendete Fahrzeugwiderstand gibt über die damit berechnete Fahrzeuglängsbeschleunigung insbesondere an, wie sich das Fahrzeug an dem Kupplungsnullmoment verhalten würde, wenn das Fahrzeug länger im Zustand bzw. an dem Punkt des Kupplungsnullmoments verbleiben würde. In diesem Zustand, an dem kein Antriebsmoment übertragen wird, würde das Fahrzeug beispielsweise in einer Ebene ausrollen, bedingt durch Verluste wie Rollwiderstand oder Luftwiderstand. Durch das langsamer werdende Fahrzeug würde auch die Kupplungsscheibe entschleunigen. Damit in dieser Situation weiter ein Kupplungsnullmoment an der Kupplung vorherrschen würde, müsste auch der Motor entsprechend entschleunigen, d. h. die negative Winkelbeschleunigung der Kupplungsschiebe muss sich auch für den Motor in Form einer Winkelbeschleunigung der Kurbelwelle ergeben. Mit anderen Worten entspricht die Winkelbeschleunigung der Kupplungsscheibe am Kupplungsnullmoment der Winkelgeschwindigkeit des Motors, die sich für ein Kupplungsmoment ergeben würde. Somit kann die Winkelbeschleunigung des Motors am Kupplungsnullmoment über die Winkelbeschleunigung der Kupplungsscheibe am Kupplungsnullmoment bestimmt werden, die wiederum über die Fahrwiderstandskraft für den offenen Triebstrang berechnet wird.

Die Triebstrangübersetzung ü kann beispielsweise aus dem Quotienten aus der Getriebeübersetzung ü_gear und dem Straßen-zu-Achsgeschwindigkeits-Verhältnis c_roadToShaftSpeedRatio bestimmt werden:

$$(\text{Formel 4}) \quad \text{ü} = \text{u\_gear} / \text{c\_roadToShaftSpeedRatio}.$$

Das Straßen-zu-Achsgeschwindigkeits-Verhältnis c_roadToShaftSpeedRatio kann gemäß Formel 5 aus dem Quotienten des Radradius r_Rad und der Hinterachsübersetzung i_rearAxle (bei Hinterachsantrieb) errechnet werden. Bei Vorderachsantrieb wird stattdessen die Vorderachsübersetzung genommen, also allgemein die Übersetzung der Antriebsachse.

$$(\text{Formel 5}) \quad \text{c\_roadToShaftSpeedRatio} = \text{v\_vehicleSpeed} / \omega\_\text{OutputShaftSpeed} =$$
$$(2*\pi*\text{r\_Rad}*\text{n\_Achse}) / (\text{i\_rearAxle}*2*\pi*\text{n\_Achse}) =$$
$$\text{r\_Rad} / \text{i\_rearAxle},$$

wobei v_vehicleSpeed der aktuellen Fahrzeuggeschwindigkeit entspricht, ω_OutputShaftSpeed der Winkelgeschwindigkeit der Antriebsachse entspricht und n_Achse der Anzahl der Umdrehungen der Antriebsachse pro Sekunde entspricht.

Zusammengefasst wird im vorliegenden Ausführungsbeispiel das trägheitsbedingte Moment M des Motors am Kupplungsnullmoment somit gemäß Formel 6 berechnet:

6

$$\text{(Formel 6)} \quad M = J * \alpha = J * a * \ddot{u} = J * (F / m) * (\ddot{u}\_gear/ c\_roadToShaftSpeedRatio) =$$

$$(J * F * \ddot{u}\_gear * i\_rearAxle) / (m * r\_Rad),$$

wobei J der Trägheitsmasse des Motors, F der Fahrwiderstandskraft bei offenem Triebstrang, ü_gear der Getriebeübersetzung, i_rearAxle der Hinterachsübersetzung, m der Fahrzeugmasse und r_Rad dem Radradius entspricht.

Die Größen F, ü_gear und i_rearAxle werden zu einem Zeitpunkt ermittelt, bei dem das Kupplungsmoment einen Wert annimmt, der in einem vorbestimmten Bereich um das Kupplungsnullmoment liegt. Zwar wird das Kupplungsnullmoment erst mittels der Formel 6 berechnet, jedoch kann vorab experimentell ein Bereich bestimmt werden, in dem das Kupplungsnullmoment typischerweise liegt. Ein derartiger Bereich ist beispielsweise durch die strichgepunkteten Linien in Figur 1 dargestellt.

Die Vorrichtung zur Verarbeitung einer Drehmomentanforderung ist somit eingerichtet, die vorstehend beschriebene Berechnung durchzuführen, um das trägheitsbedingte Moment des Motors für die Winkelbeschleunigung, die sich für ein Kupplungsnullmoment ergeben würde, zu bestimmen. Das bestimmte trägheitsbedingte Drehmoment des Motors wird zu den anderen Drehmomenten addiert. Diese sind die Motorreibung, die beispielsweise aus dem temperaturabhängigen Motorreibkennfeld abgefragt wird, das in der Steuereinheit des Fahrzeugs hinterlegt ist; das Verlustmoment des Lüfters und das Verlustmoment der weiteren motorseitigen Nebenverbraucher, wie beispielsweise Luftpresser, Lenkhilfspumpengenerator, Klimaanlage etc.. Die Summe dieser Momente ergibt das Kupplungsnullmoment.

Vorstehend wurde ferner bereits festgestellt, dass die Bestimmung des Kupplungsnullmoments weiter verbessert werden kann, wenn zusätzlich noch ein Korrekturwert zur Berücksichtigung unbestimmter Drehmomentverbraucher ermittelt wird, der zu den vorgenannten Momenten hinzuaddiert wird. Damit können weitere Verbraucher, die nicht bekannt sind, bzw. deren Moment nicht einzeln bestimmt werden kann oder deren Moment sich dynamisch im Fahrbetrieb ändert, zusätzlich berücksichtigt werden.

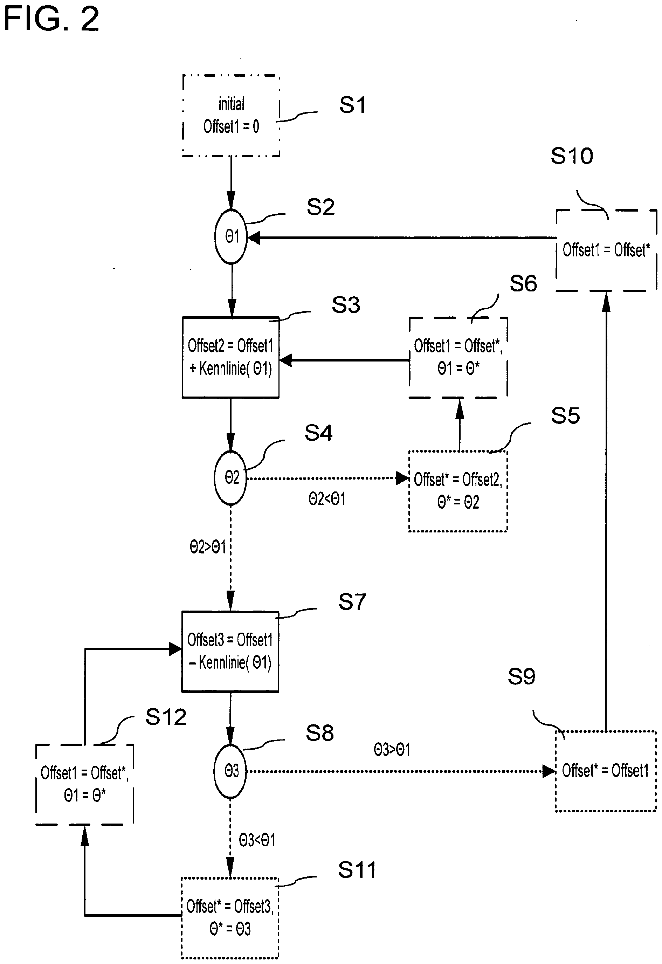

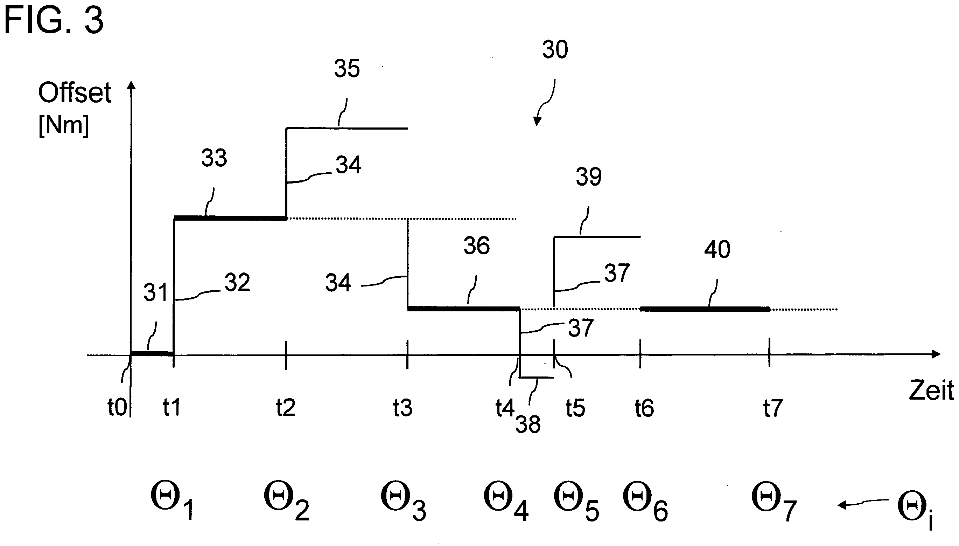

Ein beispielhafter iterativer Berechnungsansatz zur Bestimmung des Korrekturwerts ist in den Figuren 2 und 3 beschrieben. In den Figuren 2 und 3 ist der Korrekturwert als Offset bezeichnet.

Zur Ausführung dieses Berechnungsverfahrens wird bei jeder Überquerung des Kupplungsnullmoments der Signalverlauf der Motordrehzahl beispielsweise für ein kurzes Zeitintervall aufgezeichnet. Auch wenn der exakte Punkt des Kupplungsnullmoments 3 nicht bekannt ist, so ist in der Regel jedoch bekannt, in welchem Bereich das Kupplungsnullmoment liegen muss, beispielsweise in dem von den strichgepunkteten Linien in Figur 1 begrenzten Bereich. In diesem Bereich wird somit der Signalverlauf der Motordrehzahl für ca. 500 ms aufgezeichnet. Im Rahmen der Erfindung wurde festgestellt, dass die Stärke des Triebstrangschlags sich an der Drehzahlkurve des Motors ablesen lässt. So zeigen Messungen, dass je größer die Amplitude der Motordrehzahlschwingung und je spitzer deren zweite Ableitung ist, desto stärker ist der Triebstrangschlag. Somit kann der Triebstrangschlag, der beim Überqueren eines Kupplungsnullmoments erzeugt wird, anhand des Amplitudenbetrags und des Betrags der zweiten Ableitung der Motordrehzahl in diesem Bereich bewertet werden:

$$\text{(Formel 7)} \quad \Theta = a1 * |\text{Amplitude}| + a2 * 2. \text{ Ableitung der } |\text{Amplitude}|$$

Die Faktoren a1 und a2 sind experimentell vorab bestimmte Gewichtungsfaktoren. Je größer der Triebstrangschlag am Kupplungsnullmoment ist, der gemessen wird, desto weiter ist somit der berechnete Wert des Kupplungsnullmoments von dem realen Wert entfernt, so dass ausgehend von der Stärke des Triebstrangschlags am Kupplungsnullmoment nach einem geeigneten Korrekturwert gesucht wird, welcher eine bessere Umformung der Ausgangsdrehmomentanforderung 1 in eine verarbeitete Drehmomentanforderung 2 ermöglicht, die in einem kleineren Triebstrangschlag am Kupplungsnullmoment 3 resultiert.

Ein Aspekt des Berechnungsalgorithmus ist es somit, bei jeder Überquerung des Kupplungsnullmoments den resultierenden Triebstrangschlag Θ zu bestimmen und in Abhängigkeit von dem bestimmten Triebstrangschlag den Korrekturwert zum Kupplungsnullmoment zu adaptieren und auf die nächste Überquerung zu warten. Wenn diese stattfindet, wird der Triebstrangschlag mit dem vorherigen verglichen und entschieden, in welche Richtung die Suche weiter fortgesetzt werden muss.

Beispielhaft kann wie in Figur 2 dargestellt vorgegangen werden.

In einem ersten Schritt S1 wird der Korrekturwert, nachfolgend auch als Offset bezeichnet, auf Null gesetzt: Offset1 = 0.

Durch die nachfolgenden Schritte S2 bis S12 wird als Wert für den Korrekturwert Offset1 immer der Wert der drei Offset-Werte Offset1, Offset2 und/oder Offset3 ausgewählt, der den geringsten Triebstrangschlag erzeugt hat. Mit anderen Worten wird von einer Suchbasis gemäß dem aktuellen Wert von Offset1 einmal nach oben und nach unten gesprungen und anhand der jeweils resultierenden Triebstrangschläge bestimmt, welche der drei Werte für den Korrekturwert (Mitte, oben, unten) der bessere ist. In beide Richtungen wird aber nur dann gesprungen, wenn man zuerst in die "falsche" Richtung gesprungen ist, d. h., wenn der Triebstrangschlag durch den Sprung schlechter wurde. Dies ist nachfolgend erläutert.

In Schritt S2 wird eine Überquerung des Kupplungsnullmoments mit dem Offset1 durchgeführt, d. h., das Kupplungsnullmoment wird, wie vorstehend beschrieben, durch zusätzliche Addition des Korrekturwerts "Offset1" berechnet und eine Gradientenbegrenzung im Bereich des Kupplungsnullmoments 3 zur Erzeugung eines möglichst flachen, konstanten Verlaufs 4 durchgeführt.

Zu Beginn wurde vom berechneten Wert für das Kupplungsnullmoment ohne Korrekturwert ausgegangen (vgl. Schritt S1: Offset1 = 0). Dieses Kupplungsnullmoment ist meistens zu klein, weshalb der erste Sprung nach oben (positiver Offset) erfolgen sollte. Der sich dabei ergebende Triebstrangschlag bei der nächsten Überquerung des Kupplungsnullmoments wird mit der Formel 7 berechnet und mit $\Theta 1$ bezeichnet.

In Schritt S3 wird danach der Offset einmal erhöht um den Wert "Kennlinie ($\Theta 1$)". Das bedeutet, dass in Abhängigkeit des ermittelten Triebstrangschlags $\Theta 1$ aus einer hinterlegten Kennlinie ein Wert für die Variation des aktuellen Offset-Wertes ermittelt wird. Dieser Variationsbetrag ist in Figur 2 als "Wert Kennlinie $\Theta 1$" bezeichnet ist. Die Kennlinie stellt dabei einen linearen Zusammenhang zwischen dem Triebstrangschlag $\Theta$ und der Änderung des Korrekturwerts dar. Dies beruht auf der Feststellung, dass umso stärker der Triebstrangschlag ist, umso größer ist die Wahrscheinlichkeit, dass der Offset stärker verändert werden muss, weshalb die Variation des aktuell gewählten Offsetwerts auch größer sein sollte.

Mit dem neuen Korrekturwert Offset2 = Offset1 + "Kennlinie ($\Theta 1$)" wird somit eine erneute Signalumformung der Momentenanforderungen durch die Vorrichtung durchgeführt, und der resultierende Triebstrangschlag bei der nächsten Durchquerung des Kupplungsnullmoments in Schritt S4 analysiert, der mit $\Theta 2$ bezeichnet ist.

In Schritt S4 wird ferner der Wert des Triebstrangschlags $\Theta 2$ mit dem vorherigen Wert des Triebstrangschlags $\Theta 1$ verglichen. Ist $\Theta 2 < \Theta 1$, dann hat die Variation des Korrekturwerts von Offset1 zu Offset2 zu einer Verbesserung des Triebstrangschlags geführt, so dass der Algorithmus nun von vorne beginnt, wobei der Wert Offset2 als neue Basis für die Variation des Offsetwerts gewählt wird.

Hierzu werden in Schritt S5 die Hilfswerte Offset* mit dem Wert von Offset2 belegt und der Wert $\Theta$* mit dem Wert von $\Theta 2$. Nachfolgend werden in Schritt S6 der Wert Offset1 auf den Wert von Offset* gesetzt und der Wert von $\Theta 1$ auf den Wert von $\Theta$*. Nachfolgend fährt der Berechnungsalgorithmus mit dem Schritt S3 fort, wobei jedoch die Werte Offset1 und $\Theta 1$ bei dieser erneuten Durchführung des Schritts S3 mit neuen Werten gemäß der Schritte S5 und S6 belegt sind.

Wurde in Schritt S4 jedoch festgestellt, dass der Triebstrangschlag $\Theta 2$ größer als der Triebstrangschlag $\Theta 1$ ist, d. h., dass durch die Erhöhung des Werts Offset1 um den Wert "Kennlinie ($\Theta 1$)" der Triebstrangschlag stärker wurde, wird nachfolgend in Schritt S7 ein Korrekturwert Offset3 bestimmt, indem vom Korrekturwert Offset1 der Wert "Kennlinie ($\Theta 1$)" abgezogen wird. Es wird somit in die entgegengesetzte Richtung gesprungen.

Um den gleichen Betrag, um den der Wert Offset1 in Schritt S3 zur Bestimmung des Werts Offset2 erhöht wurde, wird er in Schritt S7 somit erniedrigt. Anschließend wird in Schritt S8 der Triebstrangschlag $\Theta 3$ bestimmt, der sich beim nächsten Durchlaufen des Kupplungsnullmoments ergibt, nachdem die Momentanforderung 1 auf Basis des Korrekturwerts Offset3 in eine verzögerte Momentanforderung 2 umgewandelt wurde.

In Schritt S8 wird ferner bestimmt, ob der Wert $\Theta 3$ größer als der Wert $\Theta 1$ ist. Falls ja, bedeutet das, dass sowohl die Erhöhung des Korrekturwerts Offset1 als auch die Verringerung des Korrekturwerts Offset1 zum Wert Offset3 zu größeren Triebstrangschlägen geführt haben, so dass der Suchalgorithmus mit der aktuellen Basis von Offset1 weiter arbeitet.

Wurde jedoch in Schritt S8 bestimmt, dass der Wert $\Theta 3$ kleiner als $\Theta 1$ ist, dann war die Verringerung des Korrekturwerts von $\Theta 1$ auf $\Theta 3$ erfolgreich, so dass nun nachfolgend um den Wert Offset3 als neue Suchbasis gesucht wird, um den Korrekturwert weiter zu verbessern.

In Schritt S11 wird hierzu der Hilfswert Offset* auf den Wert Offset3 gesetzt und der Hilfswert $\theta$* auf den Hilfswert $\Theta 3$, und in Schritt S12 wird der Wert Offset1 auf den Wert Offset* und der Wert $\Theta 1$ auf den Wert $\Theta$* gesetzt, um mit den neu belegten Werten in Schritt S7 fortzufahren.

Bei dem zweiten Durchlaufen des Schrittes S7 wird zwar die Basis Offset3 beibehalten, jedoch ändert sich die Variation des Werts "Kennlinie ($\Theta 1$)", da die mit $\Theta 1$ bezeichnete Größe nunmehr durch den Wert von $\Theta 3$ belegt wurde.

Die Abfolge der Schritte S7, S8, S11 und S12 erfolgt solange, bis das Abbruchkriterium in Schritt S8 erfüllt ist, d. h. bis $\Theta 3$ größer als $\Theta 1$ ist. In diesem Fall startet der Offset-Berechnungsalgorithmus wieder von vorne bei Schritt S2, wobei mittels der Schritte S9 und S10 die zuletzt verwendete Suchbasis als Ausgangspunkt für den Wert Offset1 in Schritt S3 verwendet wird.

Figur 3 illustriert beispielhaft die ersten Variationen der Korrekturwerte, die mit dem in Figur 2 gezeigten Algorithmus bestimmt werden. Die Werte $\Theta i$, i = 1, 2, 3, 4,..n, in Figur 3 bezeichnen Werte für die Triebstrangschläge bei Durchquerung des Kupplungsnullmoments für verschiedene Zeitpunkte i, die nacheinander gemäß der Formel 7 bestimmt werden. Sie sind daher von den Triebstrangwerten $\Theta i$, i= 1, 2 oder 3 gemäß der Figur 2 zu unterscheiden, da dort der Werte $\Theta 1$ dem Schritt S2, $\Theta 2$ dem Schritt S4, und $\Theta 3$ dem Schritt S8 zugeordnet sind und die Schritte S2, S4 und S8 im Zeitverlauf wiederholt durchlaufen werden können.

In einem ersten Schritt wird zum Zeitpunkt t0 der Korrekturwert 31 (Offset1) auf 0 gesetzt. In Schritt S2 erfolgt in Zeitpunkt t1 eine Bestimmung des Triebstrangschlags $\Theta 1$ bei der nächsten Überquerung des Kupplungsnullmoments. Nachfolgend erfolgt entsprechend Schritt S3 der Fig. 2 eine Erhöhung der Korrekturwerts um den Wert "Kennlinie ($\Theta 1$)" 32 auf den neuen Korrekturwert 33 (Offset2).

Zum Zeitpunkt t2 erfolgt ein weiterer Durchgang durch das Kupplungsnullmoment, wobei ein Triebstrangschlag $\Theta 2$ gemessen wird. Der Triebstrangschlag $\Theta 2$ ist im Beispiel der Figur 3 kleiner als $\Theta 1$, so dass in die richtige Richtung gesprungen wurde, da der Triebstrangschlag kleiner wurde.

Über die Schritte S5 und S6 erfolgt somit eine Festlegung des Korrekturwerts 33 als neuer Wert der Basis Offset1 für die nachfolgenden Suchschritte. Bei der erneuten Durchführung des Schritts S3 wird die neue Basis 33 um den Wert 34, der aus der Kennlinie in Abhängigkeit des zuvor bestimmten Triebstrangschlags $\Theta 2$ ermittelt wird, auf den Wert 35 erhöht. Mit dem neuen Korrekturwert 35 erfolgt ein Durchgang des Kopplungsnullmoments zum Zeitpunkt t3, bei dem ein Triebstrangschlag $\Theta 3$ gemessen wird. Der Triebstrangschlag $\Theta 3$ ist größer als der Triebstrangschlag $\Theta 2$, so dass ausgehend von Schritt S4 der Algorithmus zu Schritt S7 fortfährt und den Korrekturwert 33 um den Wert 34 nun nach unten verringert, um einen neuen Korrekturwert 36 zu erhalten. Beim nächsten Durchgang durch das Kupplungsnullmoment wird zum Zeitpunkt t4 ein Triebstrangschlag $\Theta 4$ gemessen. $\Theta 4$ ist im Beispiel der Figur 3 kleiner als der Triebstrangschlag $\Theta 2$, so dass nun nachfolgend um den Korrekturwert 36 als neue Suchbasis gesucht wird, was durch die dicke Linie in Figur 3 gekennzeichnet ist, die jeweils die "Gewinner" der Variationen der Suchwerte kennzeichnen.

Ausgehend von dem Korrekturwert 36 wird weiter nach unten gesprungen, indem der Korrekturwert 36 um den Wert 37 auf den neuen Korrekturwert 38 verringert wird. Zum Zeitpunkt t5 wird ein neuer Triebstrangschlag $\Theta 5$ gemessen, der jedoch größer ist als der Triebstrangschlag $\Theta 4$, so dass der Korrekturwert 36 nachfolgend um den Wert 37 erhöht wird, um den neuen Korrekturwert 39 zu erhalten. Nachfolgend wird im Zeitpunkt t6 ein Triebstrangschlag $\Theta 6$ beim Durchgang des Kupplungsnullmoments gemessen.

Im vorliegenden Beispiel ist jedoch $\Theta 6$ ebenfalls größer als $\Theta 4$, so dass nachfolgend weiterhin um die gleiche Suchbasis bestimmt wird, d. h., der Korrekturwert 40 ist identisch mit dem zu 36, wobei im nachfolgenden Schritt (in Figur 3 nicht mehr gezeigt) der Variationswert von Wert 37 unterschiedlich ist und vom Wert der Kennlinie in Abhängigkeit von $\Theta 7$ abhängt.

Eine Option des Suchalgorithmus ist, dass man für jeden Gang einen eigenen Korrekturwert (Offset) optimiert und diesen abspeichert, solange der Gang nicht eingelegt ist. Wird der Gang erneut eingelegt, dann wird der abgespeicherte Offset verwendet und nicht der zuletzt ermittelt Offset im anderen Gang. Dies ist sinnvoll, da die Ursachen für den Wert des Offsets sich entsprechend des Gangs unterschiedlich auswirken.

Obwohl die Erfindung unter Bezugnahme auf bestimmte Ausführungsbeispiele beschrieben worden ist, ist eine Vielzahl von Varianten und Abwandlungen möglich, die ebenfalls von dem Erfindungsgedanken Gebrauch machen und deshalb in den Schutzbereich fallen. Beispielsweise ist die Bestimmung des Korrekturwerts für die Bestimmung des Kupplungsnullmoments nicht auf den in Fig. 2 gezeigten Ansatz beschränkt. Folglich soll die Erfindung nicht auf die offenbarten bestimmten Ausführungsbeispiele begrenzt sein, sondern die Erfindung soll alle Ausführungsbeispiele umfassen, die in den Bereich der beigefügten Patentansprüche fallen.

**Bezugszeichenliste**

| | |
|---|---|
| 1 | Drehmomentanforderung (ungefiltert) |
| 2 | Drehmomentanforderung (gefiltert) |
| 3 | Kupplungsnullmoment |
| 4 | Durchgang durch Kupplungsnullmoment |
| K | Verrundungsfaktor |
| G | Gradient |
| $\Theta^*$, $\Theta i$ | Triebstrangschlag |
| 31, 33, 36, 40 | Korrekturwert mit verbessertem Triebstrang |
| 32, 34, 37 | Variationsbetrag Korrekturwert |
| 35, 39 | Korrekturwert mit verschlechtertem Triebstrang |

**Patentansprüche**

1. Vorrichtung zur Verarbeitung einer Drehmomentanforderung (1) für eine Antriebsmaschine und zur Reduzierung von Triebstrangschlägen, die eingerichtet ist, einen Gradienten der Drehmomentanforderung (1) in einem Bereich um ein Kupplungsnullmoment (3) zu reduzieren;
**dadurch gekennzeichnet,**
**dass** die Vorrichtung eingerichtet ist, ein trägheitsbedingtes Drehmoment der Antriebseinheit zu bestimmen und das Kupplungsnullmoment in Abhängigkeit von dem trägheitsbedingten Drehmoment zu bestimmen.

2. Vorrichtung nach Anspruch 1, **dadurch gekennzeichnet, dass** die Vorrichtung eingerichtet ist, das trägheitsbedingte Drehmoment der Antriebseinheit in Abhängigkeit von einer Winkelbeschleunigung der Antriebseinheit, die sich für das Kupplungsnullmoment ergeben würde, zu bestimmen.

3. Vorrichtung nach Anspruch 1 oder 2, **dadurch gekennzeichnet, dass** die Vorrichtung eingerichtet ist,

   (a) eine Fahrzeuglängsbeschleunigung in Abhängigkeit von einem Fahrwiderstand für den offenen Triebstrang und einer Fahrzeugmasse zu berechnen; und
   (b) eine Winkelbeschleunigung der Kupplungsscheibe in Abhängigkeit von der berechneten Fahrzeuglängsbeschleunigung und einer Triebstrangübersetzung zu bestimmen; und
   (c) das trägheitsbedingte Drehmoment in Abhängigkeit von einer Trägheitsmasse des Motors und der Winkelbeschleunigung der Kupplungsscheibe zu bestimmen.

4. Vorrichtung nach einem der vorhergehenden Ansprüche, **dadurch gekennzeichnet, dass** die Vorrichtung eingerichtet ist, das trägheitsbedingte Drehmoment M zu berechnen als $M = (J * F * ü\_gear * i\_rearAxle) / (m * r\_Rad)$, wobei J der Trägheitsmasse des Motors, F der Fahrwiderstandskraft bei offenem Triebstrang, ü_gear der Getriebeübersetzung, i_rearAxle der Hinterachsübersetzung, m der Fahrzeugmasse und r_Rad dem Radradius entspricht.

5. Vorrichtung nach einem der vorhergehenden Ansprüche, **dadurch gekennzeichnet, dass** die Vorrichtung eingerichtet ist, das Kupplungsnullmoment in Abhängigkeit von einer Motorreibung, einem Verlustmoment eines Lüfters und einem Verlustmoment von motorseitigen Nebenverbrauchern zu bestimmen.

6. Vorrichtung nach einem der vorhergehenden Ansprüche, **dadurch gekennzeichnet, dass** die Vorrichtung eingerichtet ist, einen Korrekturwert (30) zur Berücksichtigung unbestimmter Drehmomentverbraucher zu bestimmen und das Kupplungsnullmoment (3) in Abhängigkeit von dem Korrekturwert (30) zu bestimmen.

7. Vorrichtung nach Anspruch 6, **dadurch gekennzeichnet, dass** die Vorrichtung eingerichtet ist, den Korrekturwert (30) im Fahrbetrieb mittels eines iterativen Algorithmus zu bestimmen.

8. Vorrichtung nach Anspruch 6 oder 7, **dadurch gekennzeichnet, dass** die Vorrichtung eingerichtet ist, den Korrekturwert in Abhängigkeit von einem Triebstrangschlag ($\Theta_i$), der bei einer Überquerung des Kupplungsnullmoments (3) bestimmt wird, zu variieren.

9. Vorrichtung nach Anspruch 8, **dadurch gekennzeichnet, dass** die Vorrichtung eingerichtet ist, den Triebstrangschlag bei der Überquerung des Kupplungsnullmoments in Abhängigkeit von einer Amplitude einer Motordrehzahl und einer zweiten Ableitung der Motordrehzahl zu bestimmen.

10. Vorrichtung nach einem der Ansprüche 7 bis 9, **dadurch gekennzeichnet, dass** der iterative Algorithmus eine Abfolge von Schritten umfasst, die wiederholt zur Aktualisierung des Korrekturwerts durchgeführt werden, wobei die Abfolge von Schritten umfasst:

    a) Bestimmen eines ersten Korrekturwerts (S1);
    b) Bestimmen eines ersten Triebstrangschlags, der in Abhängigkeit von dem ersten Korrekturwert erzeugt wird (S2);
    c) Bestimmen eines zweiten Korrekturwerts durch Erhöhen oder Verringern des ersten Korrekturwerts um einen vom ersten Triebstrangschlag abhängigen Variationsbetrag und Bestimmen eines zweiten Triebstrangschlags, der in Abhängigkeit von dem zweiten Korrekturwert erzeugt wird (S3);
    falls der zweite Triebstrangschlag kleiner als der erste Triebstrangschlag ist,
    d) Festlegen des zweiten Korrekturwerts als neuer erster Korrekturwert und Festlegen des zweiten Triebstrangschlags als neuer Wert für den ersten Triebstrangschlag (S5, S6) und Wiederholen von Schritt c);
falls der zweite Triebstrangschlag größer als der erste Triebstrangschlag ist,

e) Bestimmen eines dritten Korrekturwerts durch Verringern oder Erhöhen des ersten Korrekturwerts um den vom ersten Triebstrangschlag abhängigen Variationsbetrag in die vom zweiten Korrekturwert entgegengesetzte Richtung (S7);

f) Bestimmen eines dritten Triebstrangschlags, der in Abhängigkeit von dem dritten Korrekturwert erzeugt wird (S8);

g) falls der dritte Triebstrangschlag kleiner als der erste Triebstrangschlag ist, Festlegen des dritten Korrekturwerts als neuer erster Korrekturwert und Festlegen des dritten Triebstrangschlags als neuer Wert für den ersten Triebstrangschlag und Wiederholen von Schritt e) (S11, S12); und

h) falls der dritte Triebstrangschlag größer als der erste Triebstrangschlag ist, Wiederholen von Schritt b) (S9, S10).

11. Vorrichtung nach einem der Ansprüche 5 bis 10, **dadurch gekennzeichnet, dass** die Vorrichtung eingerichtet ist, für jeden Gang einen eigenen Korrekturwert (30) zu bestimmen und zu speichern; wobei bei Einlegung eines Ganges der für den eingelegten Gang abgespeicherte Korrekturwert anstelle des Korrekturwerts des zuvor eingelegten Ganges zur Bestimmung der Kupplungsnullmoments (3) verwendet wird.

12. Verfahren zur Verarbeitung einer Drehmomentanforderung (1) für eine Antriebsmaschine und zur Reduzierung von Triebstrangschlägen, umfassend: Reduzieren eines Gradienten der Drehmomentanforderung in einem Bereich um ein Kupplungsnullmoment (3);
**gekennzeichnet durch**
Bestimmen eines trägheitsbedingten Drehmoments der Antriebseinheit und Bestimmen des Kupplungsnullmoments (3) in Abhängigkeit von dem trägheitsbedingten Drehmoment.

13. Verfahren nach Anspruch 12, **dadurch gekennzeichnet, dass** das trägheitsbedingte Drehmoment der Antriebseinheit in Abhängigkeit von einer Winkelbeschleunigung der Antriebseinheit, die sich für das Kupplungsnullmoment ergeben würde, bestimmt wird.

14. Verfahren nach Anspruch 12 oder 13, **gekennzeichnet durch** die Schritte:

(a) Berechnen einer Fahrzeuglängsbeschleunigung in Abhängigkeit von einem Fahrwiderstand für den offenen Triebstrang und einer Fahrzeugmasse;
(b) Bestimmen einer Winkelbeschleunigung der Kupplungsscheibe in Abhängigkeit von der berechneten Fahrzeuglängsbeschleunigung und einer Triebstrangübersetzung; und
(c) Bestimmen des trägheitsbedingten Drehmoments in Abhängigkeit von einer Trägheitsmasse des Motors und der Winkelbeschleunigung der Kupplungsscheibe.

15. Verfahren nach einem der Ansprüche 12 bis 14, **gekennzeichnet durch** das Bestimmen eines Korrekturwerts (30) zur Berücksichtigung unbestimmter Drehmomentverbraucher und Bestimmen des Kupplungsnullmoments in Abhängigkeit des Korrekturwerts.

**Claims**

1. A device for processing a torque request (1) for a drive machine and for reducing drive train impacts, which is configured to reduce a gradient of the torque request (1) in a region around a clutch zero torque (3);
**characterized**
**in that** the device is configured to determine an inertia-conditioned torque of the drive unit and to determine the clutch zero torque as a function of the inertia-conditioned torque.

2. The device according to Claim 1, **characterized in that** the device is configured to determine the inertia-induced torque of the drive unit as a function of an angular acceleration of the drive unit which would result for the clutch zero torque.

3. The device according to Claim 1 or 2, **characterized in that** the device is configured

(a) to calculate a longitudinal acceleration of the vehicle as a function of a driving resistance for the open drive train and a vehicle mass; and
(b) to determine an angular acceleration of the clutch disc as a function of the calculated longitudinal acceleration of the vehicle and a drive train transmission ratio; and
(c) to determine the inertia-induced torque as a function of a mass inertia of the engine and the angular acceleration of the clutch disc.

4. The device according to one of the preceding claims, **characterized in that** the device is configured to calculate the inertia-induced torque M as

$$M = (J * F * \ddot{u}\_gear * i\_rearAxle)/(m * r\_Rad),$$

where J corresponds to the mass inertia of the engine, F corresponds to the driving resistance force when the drive train is open, ü_gear corresponds to the gear transmission ratio, i_rearAxle corresponds to the rear axle transmission ratio, m corresponds to the vehicle mass and r_Rad corresponds to the wheel radius.

5. The device according to one of the preceding claims, **characterized in that** the device is configured to determine the clutch zero torque as a function of engine friction, a torque loss of a fan and a torque loss of engine-side secondary consumers.

6. The device according to one of the preceding claims, **characterized in that** the device is configured to determine a correction value (30) in order to take into account undetermined torque consumers, and to determine the clutch zero torque (3) as a function of the correction value (30).

7. The device according to Claim 6, **characterized in that** the device is configured to determine the correction value (30) in the driving mode by means of an iterative algorithm.

8. The device according to Claim 6 or 7, **characterized in that** the device is configured to vary the correction value as a function of a drive train impact ($\Theta_i$) which is determined upon a crossing of the clutch zero torque (3).

9. The device according to Claim 8, **characterized in that** the device is configured to determine the drive train impact upon the crossing of the clutch zero torque as a function of an amplitude of an engine speed and of a second derivative of the engine speed.

10. The device according to one of Claims 7 to 9, **characterized in that** the iterative algorithm comprises a sequence of steps which are repeatedly carried out in order to update the correction value, wherein the sequence of steps comprises:

a) determining a first correction value (S1) ;
b) determining a first drive train impact which is generated as a function of the first correction value (S2);
c) determining a second correction value by increasing or reducing the first correction value by a variation amount which is dependent on the first drive train impact, and determining a second drive train impact which is generated as a function of the second correction value (S3);
if the second drive train impact is smaller than the first drive train impact,
d) defining the second correction value as a new first correction value, and defining the second drive train impact as a new value for the first drive train impact (S5, S6) and repeating step c) ;
if the second drive train impact is greater than the first drive train impact,
e) determining a third correction value by reducing or increasing the first correction value by the variation amount which is dependent on the first drive train impact, in the opposite direction to the second correction value (S7) ;
f) determining a third drive train impact which is generated as a function of the third correction value (S8);
g) if the third drive train impact is smaller than the first drive train impact,
defining the third correction value as a new first correction value, and defining the third drive train impact as a new value for the first drive train impact and repeating step e) (S11, S12); and
h) if the third drive train impact is greater than the first drive train impact, repeating step b) (S9, S10).

11. The device according to one of Claims 5 to 10, **characterized in that** the device is configured to determine a separate correction value (30) for each gear and to store it; wherein when a gear is engaged the correction value which is stored for the engaged gear is used, instead of the correction value of the previously engaged gear, to determine the clutch zero torque (3).

12. A method for processing a torque request (1) for a drive machine and for reducing drive train impacts, comprising: reducing a gradient of the torque request in a region around a clutch zero torque (3); **characterized by** determining an inertia-induced torque of the drive unit and determining the clutch zero torque (3) as a function of the inertia-inducted torque.

13. The method according to Claim 12, **characterized in that** the inertia-induced torque of the drive unit is determined as a function of an angular acceleration of the drive unit which would result for the clutch zero torque.

14. The method according to Claim 12 or 13, **characterized by** the steps:

   (a) calculating a longitudinal acceleration of the vehicle as a function of a driving resistance for the open drive train and a vehicle mass;
   (b) determining an angular acceleration of the clutch disc as a function of the calculated longitudinal acceleration of the vehicle and a drive train transmission ratio; and
   (c) determining the inertia-induced torque as a function of a mass inertia of the engine and the angular acceleration of the clutch disc.

15. The method according to one of Claims 12 to 14, **characterized by** the determination of a correction value (30) for taking into account undetermined torque consumers and determining the clutch zero torque as a function of the correction value.

**Revendications**

1. Dispositif de traitement d'une demande de couple (1) destiné à un moteur d'entraînement et de réduction de chocs de transmission, lequel dispositif est conçu pour réduire un gradient de la demande de couple (1) dans une gamme située autour d'un couple d'embrayage nul (3) ;
   **caractérisé en ce que**
   le dispositif est conçu pour déterminer un couple, lié à l'inertie, de l'unité d'entraînement et pour déterminer le couple d'embrayage nul en fonction du couple lié à l'inertie.

2. Dispositif selon la revendication 1, **caractérisé en ce que** le dispositif est conçu pour déterminer le couple, lié à l'inertie, de l'unité d'entraînement en fonction d'une accélération angulaire de l'unité d'entraînement qui donnerait un couple d'embrayage nul.

3. Dispositif selon la revendication 1 ou 2, **caractérisé en ce que** le dispositif est conçu pour

   (a) calculer une accélération longitudinale du véhicule en fonction de la résistance au roulement pour la transmission ouverte et de la masse du véhicule ; et
   (b) déterminer une accélération angulaire du disque d'embrayage en fonction de l'accélération longitudinale calculée du véhicule et d'un rapport de transmission ; et
   (c) déterminer le couple, lié à l'inertie, en fonction de la masse d'inertie du moteur et de l'accélération angulaire du disque d'embrayage.

4. Dispositif selon l'une des revendications précédentes, **caractérisé en ce que** le dispositif est conçu pour calculer le couple M, lié à l'inertie, tel que

$$M = (J * F * ü\_gear * i\_rearAxle) / (m * r\_Rad),$$

J étant la masse d'inertie du moteur, F étant la force de résistance au roulement lorsque la transmission est ouverte, ü_gear étant le rapport de transmission, i_rearAxle étant le rapport de pont arrière, m étant la masse du véhicule et r_Rad étant le rayon des roues.

**5.** Dispositif selon l'une des revendications précédentes, **caractérisé en ce que** le dispositif est conçu pour déterminer le couple d'embrayage nul en fonction du frottement du moteur, d'un couple de perte d'un ventilateur et d'un couple de perte des consommateurs auxiliaires côté moteur.

**6.** Dispositif selon l'une des revendications précédentes, **caractérisé en ce que** le dispositif est conçu pour déterminer une valeur de correction (30) permettant de prendre en compte des consommateurs à couple indéfini et pour déterminer le couple d'embrayage nul (3) en fonction de la valeur de correction (30).

**7.** Dispositif selon la revendication 6, **caractérisé en ce que** le dispositif est conçu pour déterminer la valeur de correction (30) pendant le roulement à l'aide d'un algorithme itératif.

**8.** Dispositif selon la revendication 6 ou 7, **caractérisé en ce que** le dispositif est conçu pour faire varier la valeur de correction en fonction d'un choc de transmission ($\Theta_i$) qui est déterminé en cas de dépassement du couple d'embrayage nul (3).

**9.** Dispositif selon la revendication 8, **caractérisé en ce que** le dispositif est conçu pour déterminer le choc de transmission en cas de dépassement du couple d'embrayage nul en fonction de l'amplitude d'un régime moteur et de la dérivée seconde du régime moteur.

**10.** Dispositif selon l'une des revendications 7 à 9, **caractérisé en ce que** l'algorithme itératif comprend une séquence d'étapes qui sont effectuées de manière répétée pour actualiser la valeur de correction, la séquence d'étapes comprenant les étapes suivantes :

a) déterminer une première valeur de correction (S1) ;
b) déterminer un premier choc de transmission généré en fonction de la première valeur de correction (S2) ;
c) déterminer une deuxième valeur de correction par augmentation ou diminution de la première valeur de correction d'une valeur de variation dépendant du premier choc de transmission et déterminer un deuxième choc de transmission qui est généré en fonction de la deuxième valeur de correction (S3) ;
si le deuxième choc de transmission est inférieur à celui du premier choc de transmission,
d) définir la deuxième valeur de correction comme étant la nouvelle première valeur de correction et définir le deuxième choc de transmission comme étant la nouvelle valeur du premier choc de transmission (S5, S6) et répéter l'étape c) ;
si le deuxième choc de transmission est supérieur au premier choc de transmission,
e) déterminer une troisième valeur de correction par diminution ou augmentation de la première valeur de correction de la valeur de variation, dépendant du premier choc de transmission, dans le sens opposé à la deuxième valeur de correction (S7) ;
f) déterminer un troisième choc de transmission qui est généré en fonction de la troisième valeur de correction (S8) ;
g) si le troisième choc de transmission est inférieur au premier choc de transmission, définir la troisième valeur de correction comme étant la nouvelle première valeur de correction et définir le troisième choc de transmission comme étant la nouvelle valeur du premier choc de transmission et répéter l'étape e) (S11, S12) ; et
h) si le troisième choc de transmission est supérieur au premier choc de transmission, répéter l'étape b) (S9, S10).

**11.** Dispositif selon l'une des revendications 5 à 10, **caractérisé en ce que** le dispositif est conçu pour déterminer et mémoriser une valeur de correction propre (30) pour chaque vitesse ; lors de l'engagement d'une vitesse, la valeur de correction mémorisée pour la vitesse engagée étant utilisée à la place de la valeur de correction de la vitesse précédemment engagée pour déterminer le couple d'embrayage nul (3).

**12.** Procédé de traitement d'une demande de couple (1) pour un moteur d'entraînement et de réduction des chocs de transmission, le procédé comprenant l'étape suivante : réduire un gradient de la demande de couple dans une gamme d'environ autour d'un couple d'embrayage nul (3) ;
**caractérisé par** les étapes suivantes :

déterminer un couple, lié à l'inertie, de l'unité d'entraînement et
déterminer le couple d'embrayage nul (3) en fonction du couple lié à l'inertie.

**13.** Procédé selon la revendication 12, **caractérisé en ce que** le couple, lié à l'inertie, de l'unité d'entraînement est déterminé en fonction d'une accélération angulaire de l'unité d'entraînement qui donnerait le couple d'embrayage nul.

**14.** Procédé selon la revendication 12 ou 13, **caractérisé par** les étapes suivantes :

(a) calculer une accélération longitudinale du véhicule en fonction d'une résistance au roulement pour la transmission ouverte et de la masse du véhicule ;
(b) déterminer une accélération angulaire du disque d'embrayage en fonction de l'accélération longitudinale calculée du véhicule et d'un rapport de transmission ; et
(c) déterminer le couple, lié à l'inertie, en fonction de la masse d'inertie du moteur et de l'accélération angulaire du disque d'embrayage.

**15.** Procédé selon l'une des revendications 12 à 14, **caractérisé par** les étapes suivantes :

déterminer une valeur de correction (30) pour prendre en compte des consommateurs à couple indéfini et déterminer le couple d'embrayage nul en fonction de la valeur de correction.

# FIG. 1

# FIG. 2

# FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005015484 A1